# EUROPÄISCHE PATENTSCHRIFT

(11) **EP 4 309 621 B1**
(45) Veröffentlichungstag und Bekanntmachung des Hinweises auf die Patenterteilung: **07.05.2025**
(21) Anmeldenummer: 22186242.8
(22) Anmeldetag: 21.07.2022
(51) Int. Cl.: A61C 13/00

(54) **VERFAHREN ZUM ANORDNEN VON STÜTZSTRUKTUREN FÜR EIN ADDITIVES FERTIGUNGSVERFAHREN EINER DENTALEN RESTAURATION**
METHOD FOR ARRANGING SUPPORTING STRUCTURES FOR THE ADDITIVE MANUFACTURING OF A DENTAL RESTORATION
PROCÉDÉ D'AGENCEMENT DE STRUCTURES D'APPUI POUR LA FABRICATION ADDITIVE D'UNE RESTAURATION DENTAIRE

(43) Veröffentlichungstag der Anmeldung: 24.01.2024
(73) Patentinhaber: Ivoclar Vivadent AG, 9494 Schaan (LI)
(72) Erfinder: JOHN, Hendrik, 9470 Buchs (CH); SCHÖCH, Alexander, 9494 Schaan (LI)
(74) Vertreter: Baldus, Oliver

(56) Entgegenhaltungen:
- US-A1- 2010 042 241
- US-A1- 2021 386 519

## Beschreibung

Die vorliegende Erfindung betrifft ein Verfahren zum Anordnen von Stützstrukturen für ein additives Fertigungsverfahren an einer dentalen Restauration und ein Computerprogramm zum Durchführen des Verfahrens.

Aktuelle CAM-AM-SW Produkte erzeugen Stützstrukturen über allgemeine Algorithmen, die keine dental-spezifischen Ansätze verfolgen.

US 2021/386519 A1 offenbart ein Verfahren zum Anordnen einer Stützstruktur für ein additives Fertigungsverfahren an einer dentalen Restauration, wobei die Stützstruktur an der Region der Gratlinie des digitalen Modells der dentalen Restauration angeordnet ist.

Es ist die technische Aufgabe der vorliegenden Erfindung, einen automatisierten Prozess zur Erzeugung von Stützstrukturen bereitzustellen, bei dem die Stützstrukturen an zahntechnisch unkritischen Bereichen an einer dentalen Restauration angreifen und zahntechnisch funktionale Flächen unversehrt bleiben.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Verfahren zum Anordnen von Stützstrukturen für ein additives Fertigungsverfahren an einer dentalen Restauration gelöst, mit den Schritten eines Erfassens einer Gratlinie in einem digitalen Modell der dentalen Restauration; und eines Hinzufügen von digitalen Stützstrukturen zu dem digitalen Modell zum Abstützen der dentalen Restauration in dem additiven Fertigungsverfahren entlang der Gratlinie. Die Gratlinie einer differenzierbaren Oberfläche zeichnet aus, dass der Gradient senkrecht auf einer der beiden Hauptkrümmungsrichtungen steht. Die Krümmung in dieser Richtung ist hierbei negativ. Durch das Verfahren kann eine optimierte Stützstruktur für Bottom-Up-Stereolithographie erzeugt werden. Durch das Verfahren wird ein automatisierter Prozess zur Erzeugung von Stützstrukturen für eine Bottom-Up-Stereolithographie in Abhängigkeit des im 3D-Druckprozess befindlichen Bauteils implementiert. Die Stützstruktur wird so erzeugt, dass diese in zahntechnisch unkritischen Bereichen an der dentalen Restauration angreifen und zahntechnisch funktionale Flächen unversehrt bleiben. Auf diese Weise wird einerseits ein stabiler Bauprozess und andererseits ein geringer Aufwand für eine Nacharbeitung erreicht. Dies wird dadurch erreicht, dass die Stützstrukturen entlang der Gratlinie verteilt werden. Für diesen Prozess der Gratlinien-Stützstrukturerzeugung werden die Gratlinien automatisch erkannt und erzeugt.

In einer technisch vorteilhaften Ausführungsform des Verfahrens wird das digitale Modell vor dem Erfassen der Gratlinie in eine vorgegebene Orientierung gedreht. Dadurch wird beispielsweise der technische Vorteil erreicht, dass geeignete Gratlinien identifiziert werden können.

In einer weiteren technisch vorteilhaften Ausführungsform des Verfahrens wird vor dem Erfassen der Gratlinie ein Typ der dentalen Restauration auf Basis des digitalen Modells bestimmt. Die dentale Restauration kann beispielsweise vom Typ "Brücke", "Schiene", "Teilprothese" oder "Vollprothese" sein. Der Typ der dentalen Restauration kann beispielsweise anhand des digitalen Modells bestimmt werden. Hierzu kann ein selbstlernender Algorithmus verwendet werden, der einem digitalen Modell automatisch einen Typ zuordnen kann, wie beispielsweise ein neuronales Netz. Dadurch wird beispielsweise der technische Vorteil erreicht, dass die Gratlinie je nach Typ der dentalen Restauration erfasst werden kann.

In einer weiteren technisch vorteilhaften Ausführungsform des Verfahrens wird eine vorgegebene Orientierung auf Basis des Typs der dentalen Restauration bestimmt. Je nach Typ der dentalen Restauration kann das digitale Modell in eine vorgegebene Orientierung gedreht werden. Dadurch wird beispielsweise der technische Vorteil erreicht, dass die Gratlinie eindeutiger bestimmt werden kann. Zudem kann die dentale Restauration in einer geeigneten Orientierung hergestellt und mit Stützstrukturen unterstützt werden.

In einer weiteren technisch vorteilhaften Ausführungsform des Verfahrens wird die Gratlinie durch ein Gradientenverfahren bestimmt. Dadurch wird beispielsweise der technische Vorteil erreicht, dass sich die Gratlinie auf einfache Weise ermitteln lässt.

In einer weiteren technisch vorteilhaften Ausführungsform des Verfahrens wird anhand eines lokalen Gradienten auf einer Oberfläche des digitalen Modells ein steilster Abstieg auf einer Oberfläche des digitalen Models festgestellt. Dadurch wird beispielsweise der technische Vorteil erreicht, dass sich die Gratlinie mit wenigen Rechenschritten ermitteln lässt.

In einer weiteren technisch vorteilhaften Ausführungsform des Verfahrens wird die Gratlinie durch Erfassen von lokalen Minima in einer Schicht des digitalen Models bestimmt. Dadurch wird beispielsweise ebenfalls der technische Vorteil erreicht, dass sich Punkte entlang der Gratlinie auf einfache Weise ermitteln lassen.

In einer weiteren technisch vorteilhaften Ausführungsform des Verfahrens werden die Minima in aufeinander folgenden Schichten des digitalen Models bestimmt. Dadurch wird beispielsweise der technische Vorteil erreicht, dass die Gratlinie schichtweise ermittelt werden kann.

In einer weiteren technisch vorteilhaften Ausführungsform wird die Gratlinie mittels eines selbstlernenden Algorithmus oder eines Wasserscheiden-Verfahrens bestimmt. Dadurch wird beispielsweise der technische Vorteil erreicht, dass die Ermittlung der Gratlinie durch Trainingsbeispiele verbessert werden kann.

In einer weiteren technisch vorteilhaften Ausführungsform des Verfahrens wird ein gegenseitiger Abstand der Stützstrukturen entlang der Gratlinie auf Basis einer Steigung der Gratlinie bestimmt. Je größer die Steigung der Gratlinie desto größer wird der Abstand entlang der Gratlinie zwischen den Stützstrukturen gewählt. Dadurch wird beispielsweise der technische Vorteil erreicht, dass die Dichte an Stützstrukturen je nach den räumlichen Anforderungen angepasst werden kann.

In einer weiteren technisch vorteilhaften Ausführungsform des Verfahrens werden die Stützstrukturen in regelmäßigen oder unregelmäßige Abständen entlang der Gratlinie angeordnet. Dadurch wird beispielsweise der technische Vorteil erreicht, dass die Gratlinie gleichmäßig oder ungleichmäßig unterstützt werden kann.

In einer weiteren technisch vorteilhaften Ausführungsform des Verfahrens werden die Stützstrukturen innerhalb eines vorgegebenen Abstands zur Gratlinie angeordnet. Dadurch wird beispielsweise der technische Vorteil erreicht, dass die Flexibilität bei der Anordnung von Stützstrukturen erhöht wird und die Gratlinie in kritischen Bereichen von Stützen unberührt bleibt.

In einer weiteren technisch vorteilhaften Ausführungsform des Verfahrens wird die dentale Restauration mit den Stützstrukturen in einem additiven Fertigungsverfahren hergestellt. Dadurch wird beispielsweise der technische Vorteil erreicht, dass das digitale Modell auf einfache Weise hergestellt werden kann.

In einer weiteren technisch vorteilhaften Ausführungsform des Verfahrens ist das additive Fertigungsverfahren ein Stereolithographieverfahren. Dadurch wird beispielsweise der technische Vorteil erreicht, dass ein besonders geeignetes Fertigungsverfahren verwendet wird.

Gemäß einem zweiten Aspekt wird die technische Aufgabe durch ein Computerprogramm gelöst, mit Befehlen, die bei der Ausführung des Computerprogramms durch einen Computer diesen veranlassen, das Verfahren nach dem ersten Aspekt auszuführen. Das Computerprogramm kann auf einer Fertigungsvorrichtung ausgeführt werden.

Ausführungsbeispiele der Erfindung sind in den Zeichnungen dargestellt und werden im Folgenden näher beschrieben.

Es zeigen:
- Fig. 1: eine Ansicht eines digitalen Models einer dentalen Restauration mit einer Gratlinie;
- Fig. 2: eine schematische Ansicht eines Gradientenverfahrens;
- Fig. 3: eine dreidimensionale Darstellung der optimalen Startpunkte;
- Fig. 4: eine schematische Ansicht eines Erfassens einer Gratlinie;
- Fig. 5: mehrere Querschnittsansichten durch das digitale Model einer dentalen Restauration;
- Fig. 6: eine weitere Querschnittsansicht durch das digitale Model einer dentalen Restauration;
- Fig. 7: eine Ansicht eines digitalen Modells einer dentalen Restauration mit hinzugefügten Stützstrukturen; und
- Fig. 8: ein Blockdiagramm eines Verfahrens ein Verfahren zum Anordnen von Stützstrukturen an einer dentalen Restauration.

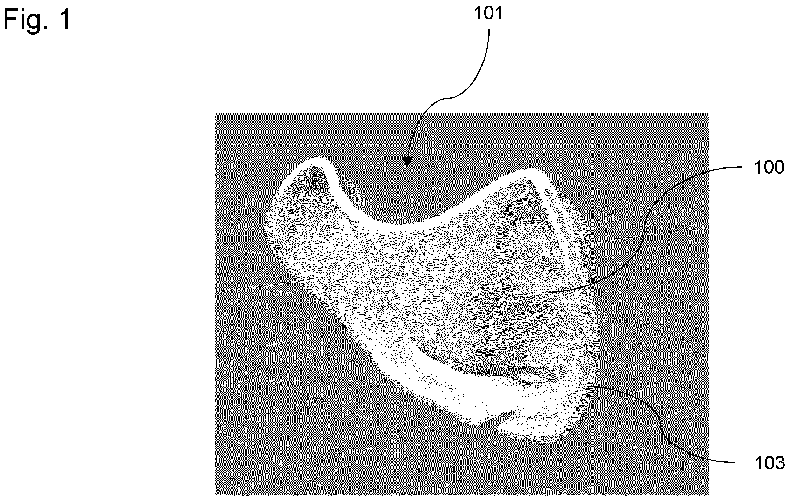

Fig. 1 zeigt eine Ansicht eines digitalen Modells 101 einer Prothesenbasis als dentaler Restauration 100 mit einer Gratlinie 103. Die dentale Restauration 100 kann im Allgemeinen aber auch, eine Brücke, eine Schiene oder eine Teil- oder Vollprothese sein.

Das digitale Modell 101 der dentalen Restauration 100 gibt die räumliche Form einer herzustellenden dentalen Restauration 100 wieder. Das digitale Modell 101 kann einen Datensatz umfassen, in dem die dreidimensionalen Koordinaten der Oberfläche des digitalen Modells 101 und andere Eigenschaften gespeichert sind. Die dentale Restauration 100 kann mithilfe eines additiven Fertigungsverfahren auf Basis des digitalen Modells 101 hergestellt werden, wie beispielsweise in einem 3D-Druckverfahren.

Beispielsweise wird die dentale Restauration 100 in einem Stereolithografieverfahren schichtweise aufgebaut. Hierbei werden Stützstrukturen verwendet, um die herzustellende dentale Restauration 100 an einer Bauplattform der Herstellungsvorrichtung abzustützen. Nach einer Herstellung werden die Stützstrukturen von der dentalen Restauration 100 entfernt.

Die Stützstrukturen erstrecken sich zwischen der Bauplattform und der dentalen Restauration 100. Diese stützen die dentale Restauration 100 an der Bauplattform ab und übertragen die Trennkräfte während der Herstellung auf die Bauplattform.

In der herzustellenden dentalen Restauration 100 kann eine Gratlinie 103 identifiziert werden. Die Gratlinie 103 zeichnet aus, dass der Gradient senkrecht auf einer der beiden Hauptkrümmungsrichtungen der Oberfläche steht.

Die automatische Erzeugung von Stützstrukturen 105 entlang der Gratlinie 103 stellt bei bestimmten Indikationen ein vorteilhaftes Verfahren dar, um die Abstützung von Funktionsflächen im Bauteil zu minimieren. Um eine sinnvolle Abstützung entlang der Gratlinie 103 zu erreichen, kann das entsprechende Bauteil in einer vorgegebenen Art und Weise orientiert werden.

Herkömmliche Verfahren sind für eine gezielte Unterstützung von Gratlinien 103 nicht geeignet, da die Gratlinien 103 einen definierten Grenzwinkel oft nicht überschreiten. Gleichzeitig können andere Bereiche des digitalen Modells 101, deren Unterstützung unerwünscht ist, einen so hohen Winkel aufweisen, dass diese unterstützt werden. Um diese Situation zu verbessern, werden die Gratlinien 103 in dem digitalen Modell 101 erfasst und anschließend gezielt mit Stützstrukturen unterstützt.

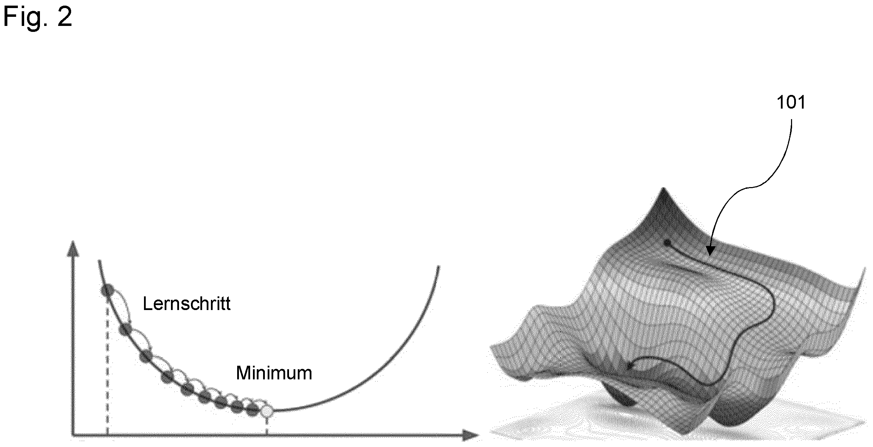

Fig. 2 zeigt eine schematische Ansicht eines Gradientenverfahrens zum Erfassen von Gratlinien 103. Ein möglicher Weg zur Detektion der Gratlinie 103 kann der Einsatz eines Optimierungsansatzes sein, wie beispielsweise eines Gradientenverfahrens (Gradient Descent Algorithm). Dabei wird schrittweise, anhand eines lokalen Gradienten auf der Oberfläche des digitalen Modells 101, der steilste Abstieg festgestellt und ein Schritt in die Richtung des steilsten Abstiegs durchgeführt. Dies wird mit kleiner werdenden Schritten so lange wiederholt, bis kein Abstieg mehr stattfindet oder eine vorgegebene Anzahl von Schritten durchgeführt worden sind.

Bei diesem Verfahren wird somit eine lokale Umgebung eines Ausgangpunktes ausgewertet, anhand derer der nächste Schritt bestimmt wird. Von einem hohen Startpunkt 107 auf der Oberfläche wird schrittweise zu einem lokalen Minimum fortgeschritten. Auf der linken Seite ist ein einfaches Beispiel in einer 1D-Funktion gezeigt. Auf der rechten Seite ein komplexeres Beispiel auf einer Höhenkarte.

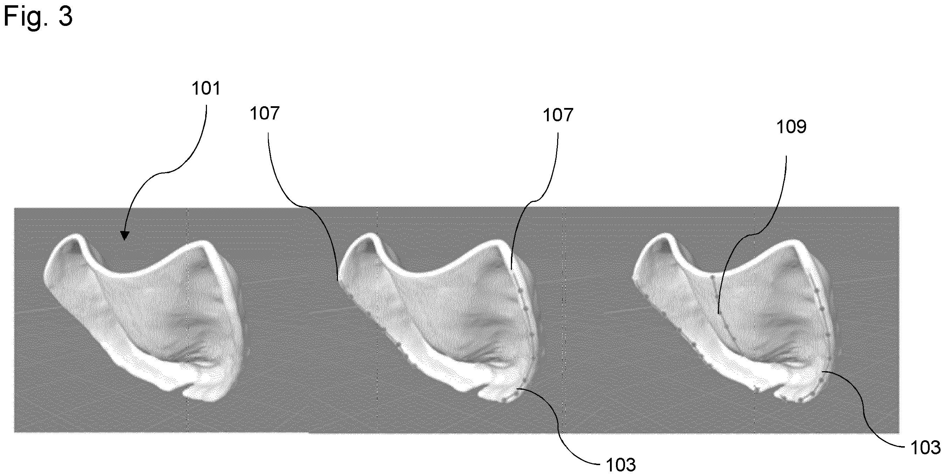

Fig. 3 zeigt eine schematische Ansicht eines Erfassens einer Gratlinie 103. Das Ergebnis zeigt nicht nur das gefundene lokale Minimum, sondern den gesamten zurückgelegten Weg. Bei entsprechend gewähltem Startpunkt 107 auf dem digitalen Modell 101 folgt das Gradientenverfahren der Gratlinie 103, da entlang dieser der steilste Abstieg erfolgt. Daher werden die Startpunkte 107 beim Gradientenverfahren zunächst entsprechend ausgewählt. Da die Schritte beim Gradientenverfahren immer kleiner werden, wird der entstandene Pfad für die Anordnung der Stützstrukturen neu abgetastet. Auf der linken Seite ist das digitale Modell 101 einer Prothesenbasis gezeigt. In der Mitte sind die Startpunkte 107 für das Gradientenverfahren und die ermittelte Gratlinie 103 gezeigt. Auf der rechten Seite sind zusätzlich lokale Minima und eine Mittellinie 109 entlang des Gaumenbereichs gezeigt.

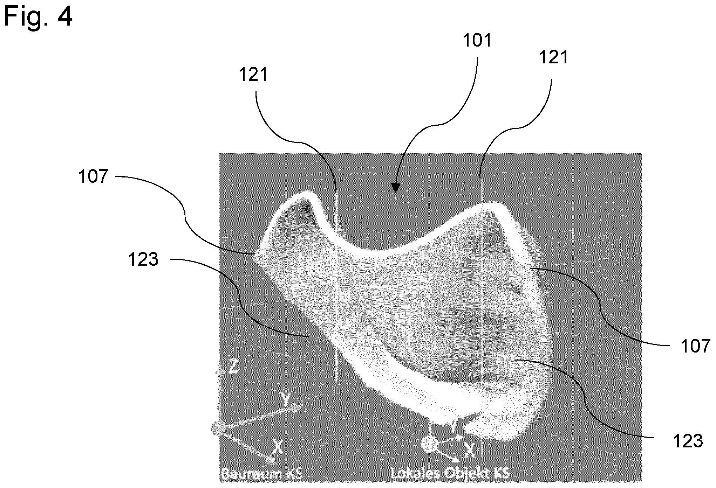

Fig. 4 zeigt eine dreidimensionale Darstellung der optimalen Startpunkte 107 in Randbereichen 123. Die Bestimmung des Startpunktes 107 für das Gradientenabstiegsverfahren kann durch Benutzerinteraktion oder automatisiert erfolgen. Bei der Benutzerinteraktion klickt ein Benutzer auf die Modelloberflache, um einen Startpunkt 107 manuell auszuwählen. Alternativ kann eine Automatisierung durchgeführt werden, beispielsweise mittels Suche der globalen Minima in Y-Richtung an definierten Randbereichen (in X-Richtung) des digitalen Modells 101. Hierzu wird das digitale Modell 101 ausgerichtet, sodass die lokalen XY-Achsen mit denen des Bauraumes identisch sind. Dann werden Randbereiche definiert, wie beispielsweise 20% der Spannweite in X-Richtung mit der Grenzlinie 121. Für jeden Randbereich wird das globale Minimum in Y-Richtung gesucht, dieser Punkt auf der Oberfläche stellt einen Startpunkt 107 dar. Die Abgrenzung der Randbereiche ist als Grenzlinie 121 dargestellt.

Der gleiche Vorgang zur Bestimmung von Startpunkten kann für den Ansatz mittels lokaler Minima in Schichtdaten verwendet werden. Pro Startpunkt betrachtet beginnt das Verfahren auf der Schicht, auf der das globale Minimum gefunden wurde oder auf der Schicht, auf der der vom Benutzer gewählte Startpunkt liegt.

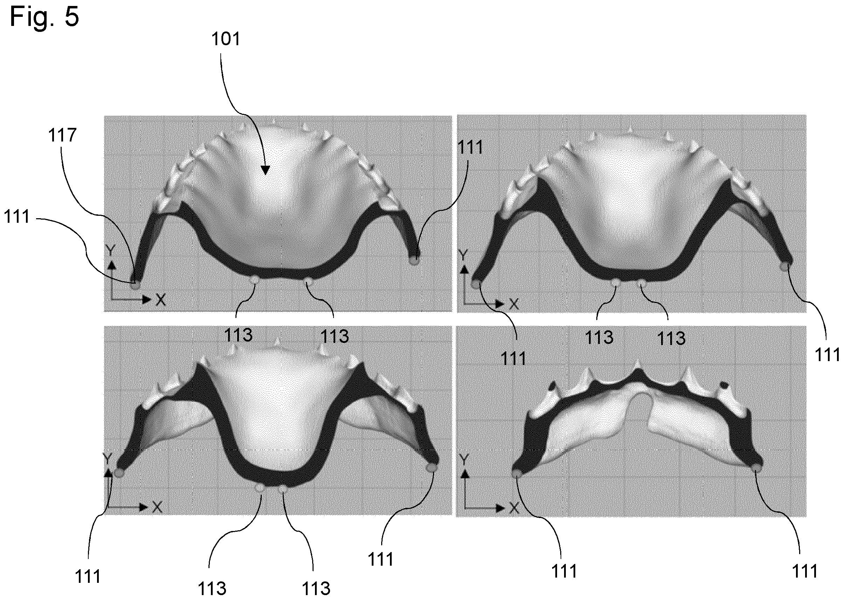

Fig. 5 zeigt mehrere Querschnittsansichten durch das digitale Model 101 einer dentalen Restauration 100. Die Gratlinie 103 kann auch anhand von lokalen Minima 117 in Schichtdaten erfasst werden. Diese Schichtdaten sind durch Schnitte durch das digitale Modell 101 gegeben. Die Schichtdaten werden an unterschiedlichen Höhen im digitalen Modell 101 gewonnen. Ist die Orientierung der dentalen Restauration 100 um die Z-Achse bekannt, können durch Analyse der lokalen Minima 117 in einer Schicht die Positionen der Gratlinie 103 gefunden werden. Die Gratlinie 103 wird durch Erfassen und Aneinanderreihen von lokalen Minima in zur Bauebene parallelen Schichten des digitalen Models 101 bestimmt.

Die dentale Restauration 100 ist so ausgerichtet, dass deren lokale XY-Achsen mit der Achse des Bauraumes identisch sind. Die Punkte 111 stellen lokale Minima 117 an der Gratlinie 103 dar. Die Punkte 113 sind hingegen lokale Minima, die im Gaumenbereich liegen und ausgeschlossen werden sollten.

Am gezeigten Beispiel können die Minima 117 an der Gratlinie 103 durch Sortierung entlang der X-Achse einfach identifiziert werden. Dies sind die Minima 117 an den Punkten 111 mit minimaler und maximaler X-Koordinate. Für digitale Modelle 101 anderer Restaurationen kann eine Filterung der Schichtdaten stattfinden, um Minima 117 in Bereichen mit hoher Frequenz und/oder kleiner Amplitude zu ignorieren.

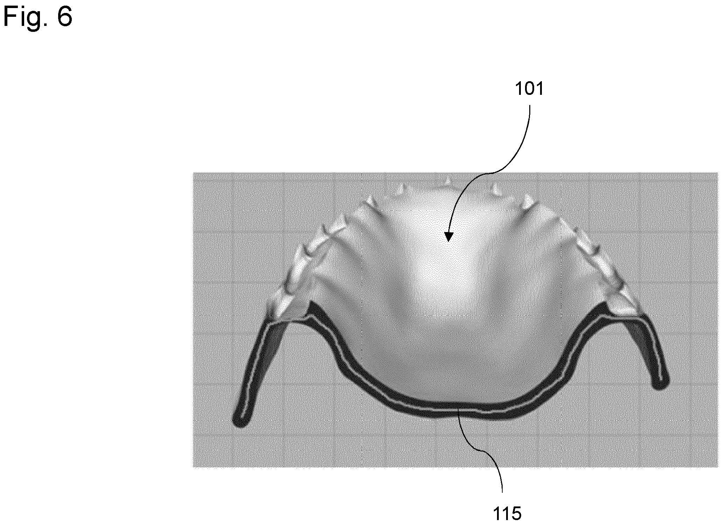

Fig. 6 zeigt eine weitere Querschnittsansicht durch das digitale Model 101 einer dentalen Restauration 100. Für eine einfachere Erfassung der Minima 117 können die Bereiche der Schichtdaten beispielsweise mittels Skelettierung zu Linien 115 transformiert werden.

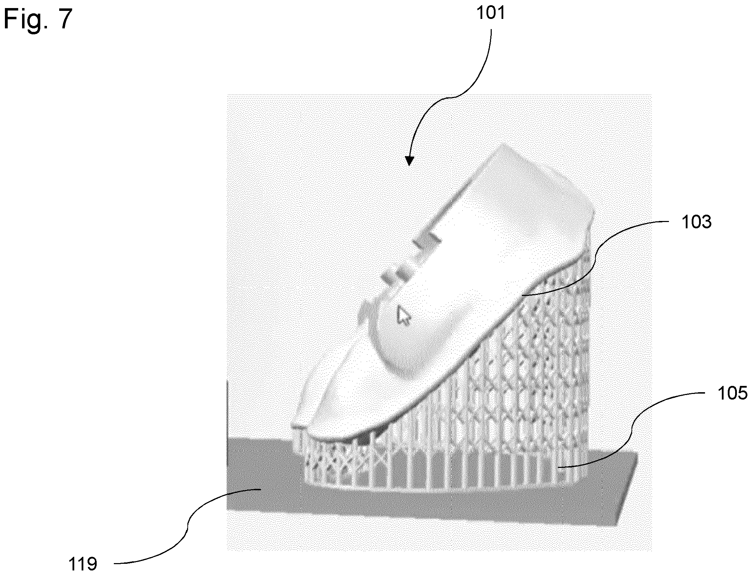

Fig. 7 zeigt eine Ansicht eines digitalen Modells 101 einer dentalen Restauration 100 mit hinzugefügten Stützstrukturen 105. Mit den Stützstrukturen 105 wird das digitalen Modells 101 entlang der Gratlinie 103 auf der Bauplattform 119 abgestützt.

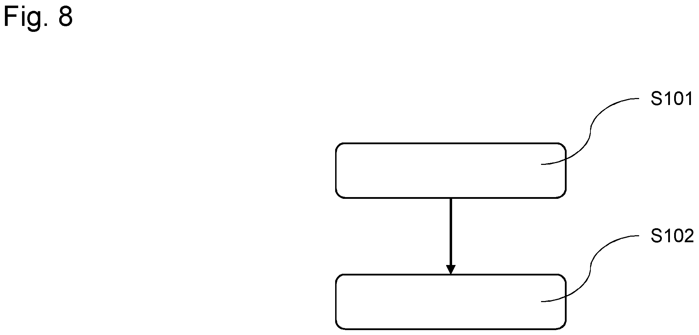

Fig. 8 zeigt ein Blockdiagramm eines Verfahrens zum Anordnen von Stützstrukturen 105 für ein additives Fertigungsverfahren an der dentalen Restauration 100. Im Schritt S101 wird zunächst die Gratlinie 103 des digitalen Modells 101 der dentalen Restauration 100 erfasst. Anschließend werden in Schritt S102 die digitalen Stützstrukturen 105 entlang der Gratlinie 103 zu dem digitalen Modell 101 hinzugefügt, um die dentale Restauration 100 in dem additiven Fertigungsverfahren abzustützen. Der Abstand eines Rasters der Stützstrukturen in der Bauebene oder der Bauplattform kann dabei konstant sein.

Die Stützstrukturen 105 und deren Kontaktpunkte an der dentalen Restauration 100 können anhand der Schichtdaten auf Basis von Bitmaps oder einer Vektordarstellung ermittelt werden. Die Ermittlung der Stützstrukturen 105 erfolgt für jede dentale Restauration 100 einzeln. Dabei sollten die dentalen Restaurationen 100 in einer bauteilspezifischen oder indikationsspezifischen Orientierung im Koordinatensystem vorliegen. Um die dentalen Restaurationen 100 auszurichten, können die dentalen Restaurationen 100 anhand der räumlichen Form in einer speziellen Software erkannt und anschließend automatisch orientiert werden. Dadurch können die korrekten Gradlinien für die Supports durch den ausgewählten Algorithmus schneller identifiziert werden.

Beispielsweise zeigt die okklusale Seite von der Bauplattform weg, d.h. ist distal zur Bauplattform. Die labiale Seite zeigt in die +X Richtung oder -X Richtung. Das Bauteil wird anschließend in einem Winkel von 30° bis 90° angestellt, sodass die okklusale Seite in -X Richtung zeigt.

Zuerst werden die lokalen Minima 117 der dentalen Restauration 100 ermittelt, die in jedem Fall mit Stützstrukturen 105 versehen werden. Für eine Erzeugung von Stützstrukturen 105 entlang der Gratlinie 103 wird die dentale Restauration 100 dann geschnitten (Slicing) und aus den einzelnen Schichten werden Rastergrafiken (Bitmaps) erzeugt. Hierbei werden die jeweiligen Schichten in der XY-Ebene in Z-Richtung von unten, d.h. der Oberfläche der Bauplattform, nach oben durchlaufen, d.h. von der Oberfläche der Bauplattform weg. Isolierte Querschnittsflächen mit Nachfolge-Querschnittsflächen werden in der folgenden Schicht als lokale Minima 117 identifiziert. Die Querschnittsflächen der dentalen Restauration 100 werden in der Schicht entgegen der X-Richtung (also in -X-Richtung) auf lokale Minima 117 untersucht. Aus der entgegengesetzten Richtung sind diese lokalen Minima 117 in X-Richtung als Spitzen (Peaks) zu deuten.

Nun können den gefundenen lokalen Minima in X-Richtung anhand des bekannten Schichtabstandes entsprechende XYZ-Koordinaten zugeordnet werden. Diese Koordinaten gegeben den Kontaktpunkt der Gratlinie 103 auf der Oberfläche der dentalen Restauration 100 an. Die Gratlinie 103 wird erfasst, indem die gefundenen und direkt benachbarten Punkte der lokalen Minima 117 über alle Schichten verbunden werden. Die Gratlinie 103 wird so durch die Verbindung der naheliegenden Minima in den aufeinander-folgenden Schichten erzeugt. Werden die so gefundenen lokalen Minima 117 in X-Richtung mit Stützstrukturen 105 versehen, entsteht ein Vorhang aus Stützstrukturen 105.

Auf die Daten der Bitmap kann auch ein Peakfinder-Algorithmus angewendet werden, der in den Bitmaps entsprechende Spitzen (Peaks) als Minima findet. In diesem Fall kann zwischen größeren (Major) und kleineren (Minor) Spitzen unterschieden werden. Ansonsten kann die Gratlinie 103 auch mittels eines selbstlernenden Algorithmus erfasst werden, der den Verlauf der Gratlinie 103 aus einer Vielzahl von Trainingsbeispielen gelernt hat. Die Trainingsbeispiele sind hierbei durch digitale Modelle 101 von dentalen Restaurationen 100 gebildet, bei denen der Verlauf der Gratlinie 103 vorgegeben ist. Die Gratlinie 103 kann aber auch durch ein Wasserscheiden-Verfahren (Watershed-Method) erfasst werden. Hierbei entspricht beispielsweise die Segmentierung einer topographischen Oberfläche eines Grauwertbildes durch Wasserscheiden der Aufteilung der Bildebene in disjunkte Auffangbecken.

Werden Höhenlinien in das digitale Modell entlang der XY-Ebene gelegt, (Außenkonturen in den Schichten), so ergibt die Verknüpfung der konvexen Scheitelpunkte in den benachbarten Höhenlinien die Gratlinie 103 und die Verknüpfung der konkaven Scheitelpunkte in den benachbarten Höhenlinien die Tallinie.

Sollen diskrete Stützenstrukturen 105 gesetzt werden, kann der gegenseitige Abstand der Stützenstrukturen 105 entlang der Gratlinie 103 in Abhängigkeit der Steigung der Gratlinie ermittelt werden, je steiler desto grösser der Abstand entlang der Gratlinie 103. Die Stützstrukturen 105 können auch in einem vorgegebenen Abstand seitlich zur Gratlinie 103 angeordnet werden, d.h. in einem Streifen entlang der Gratlinie 103.

Durch diese Art der Erzeugung von Stützstrukturen 105 entlang der Gratlinie 103 werden andere Bereiche (außer Stellen mit lokalen Minima und kritische Überhänge) weitestgehend von Stützstrukturen 105 freigehalten. Die dentale Restauration 100 wird optimal abgestützt und ein Zahntechniker hat einen minimalen Aufwand für eine Nachbearbeitung.

Zusätzlich kann die Gratlinie 103 in dem digitalen Modell 101 geglättet erden. Das ist beispielsweise in einem eingeschränkten Bereich unterhalb der Pixel-/Voxel-Auflösung des 3D-Druckers erlaubt, da hierbei die Form der dentalen Restauration 100 erhalten bleibt.

Durch das Verfahren werden die Umschlagfalten der dentalen Restauration 100 automatisch identifiziert und Stützstrukturen 105 entlang der Gratlinie 103 angeordnet. Dazu kann die dentale Restauration 100 zuvor zu einem Typ zugeordnet werden, bei der eine Stützstrukturerzeugung entlang einer Gratlinie 103 effizient verwendet werden kann. Die dentale Restauration kann beispielsweise vom Typ "Brücke", "Schiene", "Teilprothese" oder "Vollprothese" sein.

Das Verfahren zum Anordnen von Stützstrukturen 105 an der dentalen Restauration 100 kann auf einem Computer mit einem Prozessor und einem digitalen Speicher durchgeführt werden. Der Prozessor verarbeitet in diesem Fall ein Computerprogramm, das in dem digitalen Speicher mit weiteren Daten abgelegt ist. Das digitale Modell 101 der dentalen Restauration 100 ist ebenfalls im Speicher des Computers abgelegt. Der Computer kann auch ein Teil einer Fertigungseinrichtung sein, wie beispielsweise einem 3D-Drucker.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Dentale Restauration
- 101: Digitales Modell
- 103: Gratlinie
- 105: Digitale Stützstrukturen
- 107: Startpunkt
- 109: Mittellinie
- 111: Punkt
- 113: Punkt
- 115: Linie
- 117: Minimum
- 119: Bauplattform
- 121: Grenzlinie
- 123: Randbereiche

## Patentansprüche

1. Verfahren zum Anordnen von Stützstrukturen (105) für ein additives Fertigungsverfahren an einer dentalen Restauration (100), mit den Schritten:
- Erfassen (S101) einer Gratlinie (103) in einem digitalen Modell (101) der dentalen Restauration (100); und
- Hinzufügen (S102) von digitalen Stützstrukturen (105) zu dem digitalen Modell (101) zum Abstützen der dentalen Restauration (100) in dem additiven Fertigungsverfahren entlang der Gratlinie (103).

2. Verfahren nach Anspruch 1, wobei das digitale Modell (101) vor dem Erfassen der Gratlinie (103) in eine vorgegebene Orientierung gedreht wird.

3. Verfahren nach einem der vorangehenden Ansprüche, wobei vor dem Erfassen der Gratlinie (103) ein Typ der dentalen Restauration (100) auf Basis des digitalen Modells (101) bestimmt wird.

4. Verfahren nach Anspruch 3, wobei eine vorgegebene Orientierung auf Basis des Typs der dentalen Restauration (100) bestimmt wird.

5. Verfahren nach einem der vorangehenden Ansprüche, wobei die Gratlinie (103) durch ein Gradientenverfahren bestimmt wird.

6. Verfahren nach Anspruch 5, wobei anhand eines lokalen Gradienten auf einer Oberfläche des digitalen Modells (101) ein steilster Abstieg auf einer Oberfläche des digitalen Models (101) festgestellt.

7. Verfahren nach einem der vorangehenden Ansprüche, wobei die Gratlinie (103) durch Erfassen von lokalen Minima (117) in einer Schicht des digitalen Models (101) bestimmt wird.

8. Verfahren nach Anspruch 7, wobei die Minima (117) in aufeinander folgenden Schichten des digitalen Models (101) bestimmt werden.

9. Verfahren nach einem der vorangehenden Ansprüche, wobei die Gratlinie (103) mittels eines selbstlernenden Algorithmus oder eines Wasserscheiden-Verfahrens bestimmt wird.

10. Verfahren nach einem der vorangehenden Ansprüche, wobei ein gegenseitiger Abstand der Stützstrukturen (105) entlang der Gratlinie (103) auf Basis einer Steigung der Gratlinie (103) bestimmt wird.

11. Verfahren nach einem der vorangehenden Ansprüche, wobei die Stützstrukturen (105) in regelmäßigen oder unregelmäßigen Abständen entlang der Gratlinie (103) angeordnet werden.

12. Verfahren nach einem der vorangehenden Ansprüche, wobei die Stützstrukturen (105) innerhalb eines vorgegebenen Abstands zur Gratlinie (103) angeordnet werden.

13. Verfahren nach einem der vorangehenden Ansprüche, wobei die dentale Restauration (100) mit den Stützstrukturen (105) in einem additiven Fertigungsverfahren hergestellt wird.

14. Verfahren nach Anspruch 13, wobei das additive Fertigungsverfahren ein Stereolithographieverfahren ist.

15. Computerprogramm, mit Befehlen, die bei der Ausführung des Computerprogramms durch einen Computer diesen veranlassen, das Verfahren nach einem der Ansprüche 1 bis 14 auszuführen.

## Claims

1. A method for arranging support structures (105) for an additive manufacturing process on a dental restoration (100), comprising the steps of:
- detecting (S101) a flash line (103) in a digital model (101) of the dental restoration (100); and
- adding (S102) digital support structures (105) to the digital model (101) for supporting the dental restoration (100) in the additive manufacturing process along the flash line (103).

2. The method according to claim 1, wherein the digital model (101) is rotated to a predetermined orientation prior to detecting the flash line (103).

3. The method according to any one of the preceding claims,
wherein a type of dental restoration (100) is determined based on the digital model (101) prior to detecting the flash line (103).

4. The method according to claim 3, wherein a predetermined orientation is determined based on the type of dental restoration (100).

5. The method according to any one of the preceding claims, wherein the flash line (103) is determined by a gradient method.

6. The method according to claim 5, wherein a steepest descent on a surface of the digital model (101) is established based on a local gradient on a surface of the digital model (101).

7. The method according to any one of the preceding claims,
wherein the flash line (103) is determined by detecting local minima (117) in a layer of the digital model (101).

8. The method according to claim 7, wherein the minima (117) are determined in successive layers of the digital model (101).

9. The method according to any one of the preceding claims,
wherein the flash line (103) is determined using a selflearning algorithm or a watershed method.

10. The method according to any one of the preceding claims,
wherein a mutual distance of the support structures (105) along the flash line (103) is determined based on a slope of the flash line (103).

11. The method according to any one of the preceding claims,
wherein the support structures (105) are arranged at regular or irregular distances along the flash line (103).

12. The method according to any one of the preceding claims,
wherein the support structures (105) are arranged within a predetermined distance from the flash line (103).

13. The method according to any one of the preceding claims,
wherein the dental restoration (100) with the support structures (105) is produced in an additive manufacturing process.

14. The method according to claim 13, wherein the additive manufacturing process is a stereolithography process.

15. A computer program, comprising instructions which, when the computer program is executed by a computer, cause the computer to execute the method of any one of claims 1 to 14.

## Revendications

1. Procédé d'agencement de structures de support (105) pour un procédé de fabrication additive sur une restauration dentaire (100), comprenant les étapes suivantes :
Détection (S101) d'une ligne de fraise (103) dans un modèle numérique (101) de restauration dentaire (100) ; et
Adjonction (S102) de structures de support numériques (105) au modèle numérique (101) pour soutenir la restauration dentaire (100) dans le procédé de fabrication additive le long de la ligne de crête (103).

2. Procédé selon la revendication 1, où le modèle numérique (101) est tourné dans une orientation donnée avant la détection de la ligne de crête (103).

3. Procédé selon l'une des revendications précédentes, où un type de restauration dentaire (100) est déterminé sur la base du modèle numérique (101) avant la détection de la ligne de crête (103).

4. Procédé selon la revendication 3, où une orientation donnée est déterminée sur la base du type de restauration dentaire (100).

5. Procédé selon l'une des revendications précédentes, où la ligne de crête (103) est déterminée par un procédé de gradient.

6. Procédé selon la revendication 5, où une descente la plus abrupte sur une surface du modèle numérique (101) est déterminée au moyen d'un gradient local sur une surface du modèle numérique (101).

7. Procédé selon l'une des revendications précédentes, où la ligne de crête (103) est déterminée en détectant des minima locaux (117) dans une couche du modèle numérique (101).

8. Procédé selon la revendication 7, où les minima (117) sont déterminés en couches successives du modèle numérique (101).

9. Procédé selon l'une des revendications précédentes, où la ligne de crête (103) est déterminée au moyen d'un algorithme d'auto-apprentissage ou d'un procédé de bassin versant.

10. Procédé selon l'une des revendications précédentes, où une distance réciproque des structures de support (105) le long de la ligne de crête (103) est déterminée sur la base d'une élévation de la ligne de crête (103).

11. Procédé selon l'une des revendications précédentes, où les structures de support (105) sont disposées à intervalles réguliers ou irréguliers le long de la ligne de crête (103).

12. Procédé selon l'une des revendications précédentes, où les structures de support (105) sont disposées à une distance prédéterminée de la ligne de crête (103).

13. Procédé selon l'une des revendications précédentes, où la restauration dentaire (100) avec les structures de support (105) est préparée dans un procédé de fabrication additive.

14. Procédé selon la revendication 13, où le procédé de fabrication additive est un procédé de stéréolithographie.

15. Programme d'ordinateur comprenant des commandes qui, lorsqu'elles sont exécutées par un ordinateur, amènent ce dernier à exécuter le procédé de l'une des revendications 1 à 14.
